(19) Europäisches Patentamt
European Patent Office
Office européen des brevets

(11) EP 0 767 204 B1

(12) EUROPEAN PATENT SPECIFICATION

(45) Date of publication and mention of the grant of the patent:
**11.06.2003 Bulletin 2003/24**

(51) Int Cl.[7]: **C08K 5/521**, C08L 77/12, C08L 69/00

(21) Application number: **96306472.0**

(22) Date of filing: **05.09.1996**

(54) **Flame-retardant resin composition**

Flammhemmende Kunstharz-Zusammensetzung

Composition résineuse ignifuge

(84) Designated Contracting States:
**DE ES FR GB IT NL**

(30) Priority: **30.09.1995 JP 27631095**

(43) Date of publication of application:
**09.04.1997 Bulletin 1997/15**

(73) Proprietor: **GENERAL ELECTRIC COMPANY
Schenectady, NY 12345 (US)**

(72) Inventors:
- **Sato, Sho
Tochigi Prefecture 321-01 (JP)**
- **Fujiguchi, Tomohide
Utsonomiya City, Tochigi Prefecture (JP)**

(74) Representative: **Szary, Anne Catherine, Dr.
London Patent Operation,
GE International, Inc.,
Essex House,
12-13 Essex Street
London WC2R 3AA (GB)**

(56) References cited:
**EP-A- 0 133 641**
**EP-A- 0 135 726**
**EP-A- 0 383 978**
**EP-A- 0 520 095**
**GB-A- 2 043 083**
**US-A- 3 639 506**
**US-A- 4 446 265**

- **PATENT ABSTRACTS OF JAPAN vol. 018, no. 604 (C-1275), 17 November 1994 & JP 06 228426 A (ASAHI CHEM IND CO LTD), 16 August 1994,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 767 204 B1

## Description

The present invention relates to a flame-retardant resin composition with superior flame-retarding qualities and strength that is obtained by blending specified phosphate ester compounds with polyphenylene ether resin or polycarbonate resin.

The phosphate ester compounds used in the present invention do not volatilize or cause smoking during molding, nor do they bleed to the surface of molded products. Moldings made of this resin composition do not show discoloration or blistering, nor are their electrical or other properties compromised by moisture absorption.

Synthetic resins are used as materials for construction, electrical appliances, automobile bodies, fibers, and the like because they are generally light weight, moisture resistant, chemical resistant, and electrically insulating, have various beneficial mechanical properties, and are moldable.

However, a drawback of synthetic resins is that they are more readily combustible than metals and inorganic materials. As a result, many methods for rendering synthetic resins flame retardant have been proposed. The more widely used examples- of such methods for rendering synthetic resins flame retardant include blending into them halogen compounds, phosphorus compounds, inorganic hydrates, or the like.

Methods of employing phosphate ester flame retardants for imparting fire-retarding properties to PPE resins and PC resins have long been used in the art. Monophosphate esters such as triphenylphosphate (hereinbelow, TPP) are generally used as phosphate ester flame retardants, but, due to their low molecular weights, they smoke during molding and bleed out, disadvantageously contaminating molds and moldings.

Bisphenol A condensed ester phosphate flame retardants such as those disclosed in Japanese Unexamined Patent Application Kokai Nos. Sho 55-118957 and Sho 59-202240 have drawn attention recently as a means for improving the above-mentioned drawbacks of monophosphate esters and because flame-retardant resin compositions have come to be used in harsher environments in recent years.

The above-mentioned bisphenol A condensed phosphate ester flame retardants do not bleed out, and they show good stability with respect to environmental stresses, for example, good thermal stability and resistance to hydrolysis, but they are extremely difficult to work with, since they have high viscosities at ordinary temperatures as a result of their high molecular weights.

As a method of improving the handling properties of flame-retardant resins, Kokai No. Hei 6-228426 disclosed a PPE resin containing a monophosphate ester flame retardant and a bisphenol A condensed phosphate ester flame retardant having an alkyl group at the terminal phenol group, typified by cresyl bisphenol A polyphosphate. This combination reduced the viscosity of the entire phosphate ester, lowered bleed out of the flame retardant, and improved the handling properties of the resin.

However, the high molecular weight of the condensed phosphate ester limits number of phosphorus atoms per molecule in this formulation. Since fire-retarding properties are generally dependent Qn the phosphorus atom content, this formulation had to be added in large amounts in order to obtain the necessary flame retardancy, which compromised thermal stability and was uneconomical. The results of our research also showed that adding more of the above-described cresyl bisphenol A polyphosphate lowers mechanical strength, for example, impact strength.

As a result of extensive research aimed at overcoming such problems, we discovered that it is possible to increase the phosphorus content of flame retardants and obtain resin compositions which are easy to work with, do not smoke during molding, do not bleed out from moldings or to molds, and have excellent flame retardancy. impact resistance, and resistance to hydrolysis by adding a combination of a condensed phosphate ester flame retardant having a specified structure and a monophosphate ester flame retardant to polyphenylene ether resin or polycarbonate resin.

Thus, the present invention provides a flame-retardant resin composition in which a total of 3 to 30 parts by weight of (B) a phosphate ester flame retardant described by general formula (1) hereinbelow and (C) a monophosphate ester flame retardant described by general formula (2) hereinbelow is blended with 100 parts by weight of (A) polyphenylene ether resin or polycarbonate resin, components (B) and (C) being used in the range of

$$(B)/\{(B) + (C)\} = 0.5\text{-}0.9.$$

Any conventional PPE resin (A-1) can be used as component (A) of the invention. PPE resin is a generic term for polymers described by the general formula

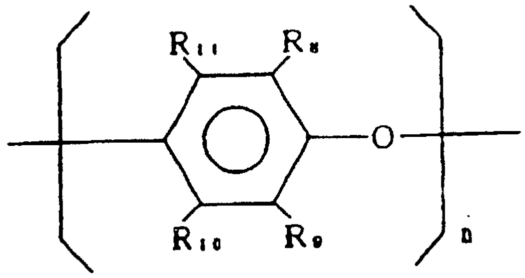

(where each $R_8$, $R_9$, $R_{10}$, and $R_{11}$ is independently a hydrogen atom, halogen atom, hydrocarbon group, substituted hydrocarbon group, alkoxy group, cyano group, phenoxy group, or nitro group, and *n* is an integer indicating degree of polymerization). The polymer described by this general formula may be used singly or as a copolymer combining two or more constituent components.

Specific examples of $R_8$, $R_9$, $R_{10}$, and $R_{11}$ include chlorine. bromine, iodine, methyl. ethyl, propyl, allyl, phenyl. benzyl, methylbenzyl, chloromethyl, bromomethyl. cyanoethyl, cyano, methoxy, ethoxy. phenoxy, and nitro.

Specific examples of the polymer include poly(2.6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly (2,6-dipropyl-1,4-phenylene) ether, poly(2-ethyl-6-propyl-1,4-phenylene) ether, poly(2,6-dimethoxy-1,4-phenylene) ether, poly(2,6-dichloromethyl-1,4-phenylene) ether, poly(2,6-dibromomethyl-1,4-phenylene) ether, poly(2,6-diphenyl-1,4-phenylene) ether, poly(2,6-ditolyl-1,4-phenylene) ether, poly(2,6-dichloro-1,4-phenylene) ether, poly(2,6-dibenzyl-1,4-phenylene) ether, and poly(2,5-dimethyl-1,4-phenylene) ether.

The preferred PPE resins are polymers in which $R_8$ and $R_9$ in the above-mentioned formula (formula 3) are alkyl groups, particularly alkyl groups with 1 to 4 carbon atoms. Polymers with an *n* value of at least 50 are especially preferred.

PPE copolymers can also be used, for example, copolymers containing some amount of alkyl-3-substituted phenol such as 2.3,6-trimethylphenol, in the polyphenylene ether repeating unit.

Copolymers with grafted styrene compounds may also be used as these PPE resins. Copolymers obtained by graft-polymerizing a styrene compound such as styrene, α-methylmethylstyrene, vinyltoluene, or chlorostyrene to the above-described PPE may be used as the styrene-grafted polyphenylene ether.

The PPE resin of component (A) in the invention is the above-mentioned PPE resin or a composition of it and an aromatic vinyl resin (A-2).

Examples of this aromatic vinyl resin include homopolymers or copolymers of styrene or styrene derivatives such as *p*-methylstyrene, α-methylstyrene, α-methyl-*p*-methylstyrene, chlorostyrene, and bromostyrene.

A rubber-modified polystyrene (HIPS) comprising 70 to 99 percent by weight of the above-described aromatic vinyl compound and 1 to 30 percent by weight of diene rubber may also be used.

Examples of the diene rubber comprising the HIPS include homopolymers of conjugated diene compounds such as butadiene, isoprene, and chloroprene: copolymers of conjugated diene compounds and unsaturated nitrile compounds or aromatic vinyl compounds: and natural rubber. They may be used singly or in combinations of two or more.

Polybutadiene and copolymers of butadiene and styrene are especially preferred. HIPS can be obtained by emulsion polymerization, suspension polymerization, bulk polymerization, solution polymerization, or a combination of these methods.

Other examples of aromatic vinyl resins include polystyrene thermoplastic elastomers such as styrene-acrylonitrile-acrylate copolymers, polystyrene modified with EPDM rubber, styrene-acrylonitrile copolymers modified with acrylic rubber, and hydrogenated styrene-butadiene block copolymers.

PPE resin and aromatic vinyl resin may be combined in any proportions in component (A); however, they are usually blended in proportions of 1 to 99 parts by weight of aromatic vinyl compound per 99 to 1 parts by weight of PPE resin. Twenty to 80 parts by weight of aromatic vinyl resin per 80 to 20 parts by weight of PPE resin is preferred.

Polycarbonate resin (A-3). the other substance of component (A) in the invention, is an aromatic polycarbonate made by a conventional phosgene or melt process. (See, for example, Kokai Nos. Sho 63-215763 and Hei 2-124934.)

Examples of the diphenols used as raw materials include 2,2-bis(4-hydroxyphenyl)propane ("bisphenol A"); 2,2-bis(3,5-dibromo-4-hidroxyphenyl)propane; 1,1-bis(4-hydroxyphenyl)cyclohexane; 1,1-bis(3,5-dimethyl-4-hydroxyphenyl)cyclohexane; 1,1-bis(4-hydroxyphenyl)decane; 1,4-bis(4-hydroxyphenyl)propane; 1,1-bis(4-hydroxyphenyl) cyclododecane; 1,1-bis(3,5-dimethyl-4-hydroxyphenyl)cyclododecane; 4,4-dihydroxydiphenyl ether; 4,4-thiodiphenol; 4,4-dihydroxy-3,3-dichlorodiphenyl ether; and 4,4-dihydroxy-2,5-dihydroxydiphenyl ether.

Examples of precursors for providing carbonates include phosgediphenyl carbonate.

The polycarbonate resin of component (A) of the invention is the above-described polycarbonate resin or a composition of it and one of the copolymer components (A-4) containing (a) an aromatic vinyl monomer component and (b) a vinyl cyanide monomer component and (A-5) containing at least (a) an aromatic vinyl monomer component, (b) a vinyl cyanide monomer component, and (c) an elastomeric polymer.

Examples of the aromatic vinyl monomer component (a) in (A-4) hereinabove include styrene, α-methylstyrene. *o*-, *m-,* or *p*-methylstyrene, vinyl xylene, monochlorostyrene, dichlorostyrene, monobromostyrene, dibromostyrene, fluorostyrene, *p-tert*-butylstyrene, ethylstyrene, and vinylnaphthalene. These components may be used singly or in combinations of two or more. Especially preferred are styrene and α-methylstyrene.

Examples of the vinyl cyanide monomer component include acrylonitrile and methacrylonitrile. These components may be used singly or in combinations of two or more. There are no particular restrictions on their mixing ratios, which may be selected as appropriate for the desired application.

Although the (a)/(b) mixing ratio is not particularly restricted, it is preferred to use 95 to 50 percent by weight of (a) and 5 to 50 percent by weight of (b) in component (A-4), more preferably 92 to 65 percent by weight of (a) and 8 to 35 percent by weight of (b).

A preferred example of copolymer component (A-4) is SAN resin (styrene-acrylonitrile copolymer).

The manufacturing method for copolymer component (A-4) is not particularly restricted, and any conventional method such as bulk polymerization, solution polymerization, bulk suspension polymerization, suspension polymerization, and emulsion polymerization may be used.

Component (A-4) can also be obtained by blending resins that have been copolymerized separately.

Component (A-5) is discussed hereinbelow. (A-5) is a copolymer of (a) an aromatic vinyl monomer component, (b) a vinyl cyanide monomer component, and (c) an elastomeric polymer.

The examples cited for component (A-4) hereinabove may be used for the aromatic vinyl monomer component (a) and vinyl cyanide monomer component (b) in (A-5).

Examples of the elastomeric component (c) include diene rubbers such as polybutadiene, polyisoprene, styrene-butandiene random and block copolymers. hydrogenated forms of such block copolymers, acrylonitrile-butadiene copolymers, and butadiene-isoprene copolymers; ethylene-unsaturated carboxylic acid ester copolymers such as ethylene-propylene random and block copolymers and copolymers of ethylene and α-olefins; ethylene-methacrylate copolymers, and ethylene-butyl acrylate copolymers; acrylic acid ester-butadiene copolymers, for example, acrylic elastomers such as butyl acrylate-butadiene copolymers, acrylic elastomers such as butyl acrylate-butadiene copolymers ; copolymers of ethylene and fatty acid vinyls such as ethylene-vinyl acetate; ethylene-propylene-nonconjugated diene terpolymers such as ethylene-propylene-ethylidene-norbornene copolymers, and ethylene-propylene-hexadiene copolymers; butylene-isoprene copolymers; and poly(ethylene chloride). These substances may be used singly or in combinations of two or more.

Preferred elastomeric polymers are ethylene-propylene rubber, ethylene-propylene-nonconjugated diene terpolymers, diene rubber, and acrylic elastomers. Polybutadiene and copolymers of styrene and butadiene are especially preferred; a styrene content of no more than 50 percent by weight is preferred for styrene-butadiene copolymers.

The mixing ratio for the components (a), (b), and (c) in component (A-5) is not particularly restricted, and the components may be blended in proportions suitable for the desired application.

In addition to the other components in component (A-5), a component (d), a monomer that is copolymerizable with components (a), (b), and (c), may be used in amounts that do not compromise the object of the invention.

Examples of such copolymerizable monomers include α,β-unsaturated carboxylic acids such as acrylic acid and methacrylic acid; esters of α,β-unsaturated carboxylic acids such as methyl (meth)acrylate, ethyl (meth)acrylate, propyl (meth)acrylate, butyl (meth)acrylate, 2-ethyl (meth)acrylate, and 2-ethylhexyl (meth)acrylate; α,β-unsaturated dicarboxylic anhydrides such as maleic anhydride and itaconic anhydride; and α,β-unsaturated dicarboxylic acid imide compounds such as maleimide and *n-o*-chlorophenyl maleimide. These substances may be used singly or in combinations of two or more.

The preferred copolymer component (A-5) is, for example, a graft copolymer in which the other components are grafted to it in the presence of a elastomeric polymer (c). Especially preferred are ABS resin (acrylonitrile-butadiene-sryrene copolymer), AES resin (acrylonitrile-ethylene-propylene-styrene copolymer), ACS resin (acrylonitrile-poly(ethylene chloride)-styrene copolymer), AAS resin (acrylonitrile, acrylic elastomer-styrene copolymer [sic → acrylonitrile-acrylic elastomer-styrene copolymer).

A method such as that used for component (A4) hereinabove can be used to manufacture polymer component (A-5).

One or more phosphate ester compounds described by the general formula hereinbelow (formula 1) may be used as component (B), hereinafter referred to as the condensed phosphate ester flame retardant.

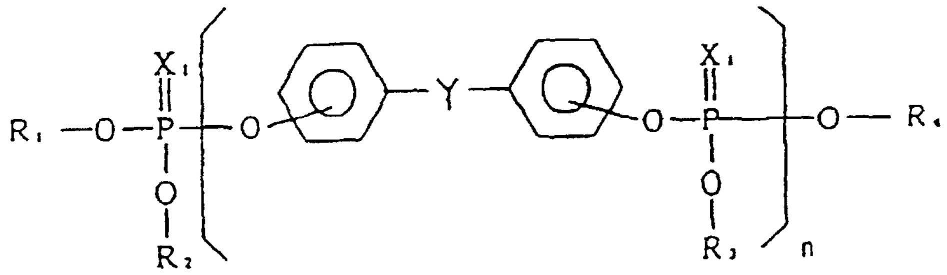 (1)

where $R_1$, $R_2$, $R_3$, and $R_4$ denote a phenyl group; $X_1$ represents an oxygen or sulphur atom; *Y* denotes a phenyl group, lower alkyl group with 1 to 6 carbon atoms, or a sulfonyl group; and *n* is an integer greater than or equal to I denoting degree of polymerization.)

Specific examples of component (B) include phenyl bisphenol A polyphosphate and phenyl bisphenol S polyphosphate.

One or more monophosphate ester compounds described by the general formula hereinbelow (formula 2) may be used as component (C), the monophosphate ester flame retardant.

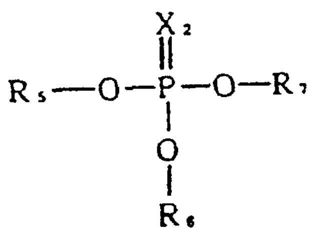 (2)

(where $R_5$, $R_6$, and $R_7$ denote a phenyl group, cresyl group, xylenyl group, trimethylphenyl group, lower alkyl group with 1 to 6 carbon atoms, or a hydrogen atom (however, $R_5$, $R_6$, and $R_7$ do not all denote hydrogen atoms), and $X_2$ denotes an oxygen or sulfur atom.)

Component (B), which is generally in a liquid state near room temperature, is easier to handle when it is used in combination with component (C), and the resin composition can be obtained more inexpensively.

Examples of component (C), the monophosphate ester compound, include triphenylphosphate, tricresylphosphate, cresylphenylphosphate, trixylenylphosphate, xylenyldiphenylphosphate, tri(isopropylphenyl)phosphate, isopropylphenyldiphenylphosphate, diisopropylphenylphosphate, tri(trimethylphenyl)phosphate, and tri(*t*-butylphenyl)phosphate.

Of these, triphenylphosphate, tricresylphosphate, and cresyldiphenylphosphate are preferred.

There are no restrictions on the blending ratio for component (A), the polyphenylene ether resin or polycarbonate resin, and component (B), the phosphate ester compound, used in the present invention, provided that the full value of the invention is realized. However, the total portion of (B) and (C) is 3 to 30, preferably 5 to 25, per 100 of (A), and (B)/{(B) + (C)} should range from 0.5 to 0.9, preferably 0.6 to 0.8.

If the total of (B) and (C) with respect to (A) is less than 3 percent, sufficient flame retardancy is not obtained. The use of more than 30 percent is undesirable because it leads to decreased flame retardancy.

If the ratio of (B) and (C) is such that $(B)/\{(B) + (C)\} \leq 0.5$, a larger amount of low-molecular-weight products will be obtained, causing smoking and bleed out.

If $(B)/\{(B) + (C)\} \geq 0.9$, flame retardancy and impact resistance will be diminished and the viscosity of the flame retardant will be increased, making the composition more difficult to work with.

In addition to the components mentioned hereinabove, the following may be added to the resin composition of the invention during mixing or molding, provided that they do not compromise the properties of the composition: other resins, especially elastomeric materials, and conventional additives such as pigments, dyes, reinforcers (e.g., glass fibers and carbon fibers), fillers (e.g., carbon black, mica, talc, silica, and titanium oxide), agents for imparting heat resistance. antioxidants, anti-weathering agents, lubricants, parting agents, crystal-nucleating agents, plasticizers, flowability enhancers, antistatic agents, bactericides, and fungicides.

The method for manufacturing the resin composition of the invention is not particularly restricted; conventional methods are satisfactory. However, a melt-kneading method is generally preferred. Solvent may be used in small amounts, but it is generally not necessary.

Examples of the apparatus to be used include extruders, Banbury mixers, rollers, and kneaders which may

be operated in a batchwise or continuous manner.

The present invention is described in further detail hereinbelow by means of working examples; however, the invention is not limited by these examples.

The following compounds were used in the working examples.

Compound (A):

PPE resin (A-1): Poly(2,6-dimethyl-1,4-phenylene) ether with an intrinsic viscosity (chloroform, 25°C) of 0.48 dL/g made by G.E. Plastics Japan. Ltd. (This is referred to as PPE hereinbelow.)

Aromatic vinyl resin (A-2): High-impact polystyrene (HIPS). (Trade name: Toplex 876-HF, made by Mitsui Toatsu Kagaku K.K.) (This product is referred to as PS hereinbelow.)

(A-3): Bisphenol A polycarbonate resin. (Trade name: Lexan, made by G.E. Plastics Japan, Ltd.) Intrinsic viscosity 0.46 dL/g measured in methylene chloride at 20°C. Mv ≈ 20,000 (Calculated)

(A-4): SAN resin. Trade name SR 30B (made by Ube Saicon K.K.) Mv = 117,000.

(A-5): ABS resin. Trade name UXO 50 (made by Ube Saicon K.K.)

(B-1) = A condensed phosphate ester flame retardant described by the following structural formula (formula 6). (Trade name: CR 741, made by Daihachi Kagaku K.K. A mixture where *n* = 1-4).

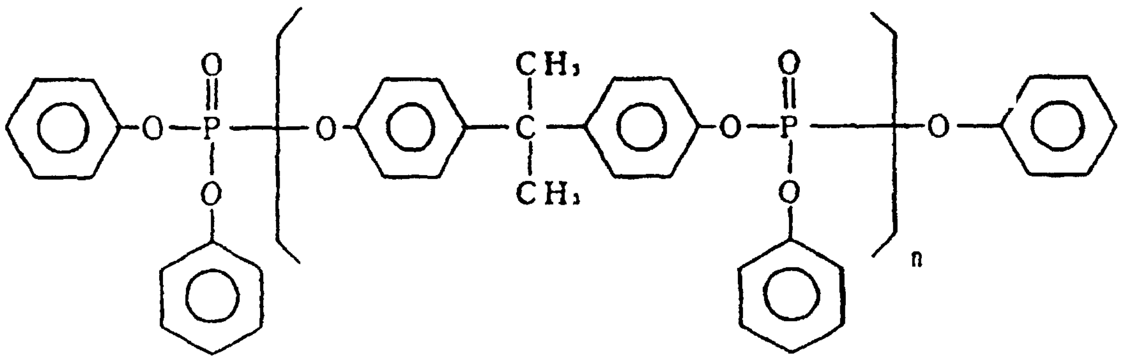

(B-2) = A phosphate ester flame retardant described by the following formula (formula 7) was used as a comparative example. (Trade name: CR741C, made by Daihachi Kagaku K.K. A compound where *n* = 1-4).

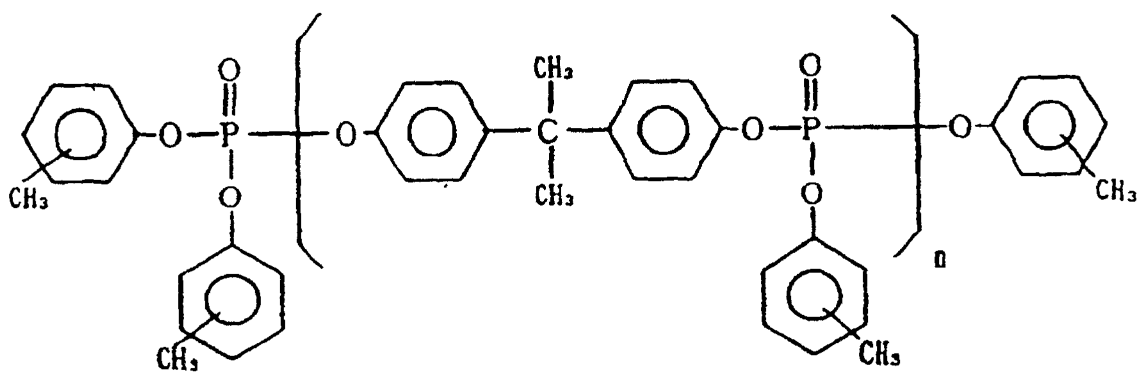

(C-1) = A monophosphate ester flame retardant described by the following structural formula (formula 8) (Trade name: TPP, made by Daihachi Kagaku K.K.)

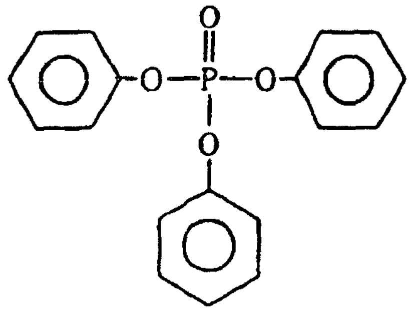

Working Examples 1-3; Comparative Example

Pellets were manufactured by melt-kneading components in the proportions shown (by weight) in Table 2 in a 30 mm twin screw extruder at a kneading temperature of 280°C and speed of 280 rpm. The pellets were then injection-molded at a temperature setting of 260°C and mold temperature of 80°C.
The moldings thus obtained were evaluated for Izod impact strength, flame retardancy, and smoking during molding. The viscosity of the total phosphate ester in each composition was also measured. The results are shown in Table 1.
Using PC resin, pellets were manufactured by melt-kneading components in the proportions shown (by weight) in Table 1 in a 30 mm twin-screw extruder at a-kneading temperature of 240°C and speed of 150 rpm. These pellets were then injection-molded at a temperature setting of 230°C and mold temperature of 50°C.
Moldings thus obtained were evaluated in the same manner as those made with PPE resin. The results are shown in Table 2.
The properties evaluated as mentioned hereinabove were measured in the following manner.

(1) Izod Impact Strength

Measured in accordance with ASTM D256 at 23°C and -30°C, using notched specimens 3.175 mm (1/8 inch) thick.

(2) Flame retardancy

Flame retardancy was evaluated in accordance with the testing method in UL-94. The mean duration of burning from first ignition until flaming stopped for a set of five 1.6 mm-thick specimens of each product was used to rate the products in accordance with UL-94.

(3) Smoking during Molding

The amount of smoke produced at the nozzle of the injection molding device when the test pieces were made was assessed visually.

(4) Viscosity of Total Phosphate Ester

The viscosity of the total phosphate esters at 25°C was found by measuring the efflux time with an Ubbelohde viscometer, finding the dynamic viscosity by multiplying the efflux time by the viscometer's constant, and then multiplying dynamic viscosity by the density of the sample.

Table 1

| Mixing ratios and evaluation results for working and comparative examples. | | | | | | | | | |
|---|---|---|---|---|---|---|---|---|---|
| | Working Example | | | Comparative Example | | | | | |
| | 1 | 2 | 3 | 1 | 2 | 3 | 4 | 5 | 6 |
| (A-1) PPE | 65 | 65 | 65 | 65 | 65 | 65 | 65 | 65 | 65 |
| (A-2) HIPS | 35 | 35 | 35 | 35 | 35 | 35 | 35 | 35 | 35 |

Table 1 (continued)

| Mixing ratios and evaluation results for working and comparative examples. | | | | | | | | | |
|---|---|---|---|---|---|---|---|---|---|
| | Working Example | | | Comparative Example | | | | | |
| | 1 | 2 | 3 | 1 | 2 | 3 | 4 | 5 | 6 |
| (B-1) BPA-TPDP | 5 | 7 | 9 | | 10 | | | | |
| (B-2) BPA-TCDP | | | | | | 10 | 12 | 5 | 6 |
| (C-1) TPP | 5 | 3 | 1 | 10 | | | | 5 | 6 |
| NII | 18 | 18 | 17 | 19 | 9 | 8 | 7 | 15 | 12 |
| Flame rerardancy | V-0 | V-0 | V-0 | V-0 | V-0 | V-1 | V-0 | V-1 | V-0 |
| Smoking | ○ | ○ | ○ | × | ○ | ○ | ○ | ○ | ○ |
| Viscosity of all phosphate esters (c-poise) mPa.s | 280 | 950 | 5460 | Solid | 25000 | 49000 | 49000 | 520 | 520 |

In the table, ○ indicates that virtually no smoking was seen, and × indicates copious smoking.

Table 2

| Mixing ratios and evaluation results for working and comparative examples. | | | | | | | | | |
|---|---|---|---|---|---|---|---|---|---|
| | Working Example | | | Comparative Example | | | | | |
| | 4 | 5 | 6* | 7 | 8 | 9 | 10 | 11 | 12 |
| (A-3) PC | 50 | 50 | 50 | 50 | 50 | 50 | 50 | 50 | 50 |
| (A-4) ABS | 20 | 20 | 20 | 20 | 20 | 20 | 20 | 20 | 20 |
| (A-5) AS | 30 | 30 | 30 | 30 | 30 | 30 | 30 | 30 | 30 |
| (B-1) BPA-TPDP | 6 | 8 | 11 | | 12 | | | | |
| (B-2) BPA-TCDP | | | | | | 12 | 15 | 6 | 8 |
| (C-1) TPP | 6 | 4 | 1 | 12 | | | | 6 | 7 |
| NII | 59 | 57 | 55 | 54 | 48 | 46 | 12 | 49 | 15 |
| Flame retardancy | V-0 | V-0 | V-0 | V-0 | V-0 | V-1 | V-0 | V-1 | V-0 |
| Smoking | ○ | ○ | ○ | × | ○ | ○ | ○ | ○ | ○ |
| Viscosity of all phosphate esters (c-poise) mPa.s | 280 | 660 | 7000 | Solid | 25000 | 49000 | 49000 | 520 | 680 |

* borderline

In the table, ○ indicates that virtually no smoking was seen, and × indicates copious smoking.

As shown in Tables 1 and 2, there was marked smoking during molding when monophosphate ester was used alone. When condensed phosphate ester was used alone, Izod impact strength diminished and the phosphate ester was highly viscous, making it difficult to work with.

BPA condensed phosphate esters with a terminal cresyl group afforded only low flame retardancy and diminishing impact strength as more ester was added.

It has been clearly shown that only the combination of condensed phosphate ester and monophosphate ester disclosed by the present invention provides excellent flame retardancy and impact strength, does not smoke during molding, and has low viscosity.

Accordingly, the flame-retardant resin composition of the invention, as described hereinabove, is easy to work with and offers a good balance of properties.

## Claims

**1.** A flame-retardant resin composition comprising:

(A) 100 parts by weight of polyphenylene ether resin or polycarbonate resin,

(B) one or more phosphate ester flame retardants described by the general formula

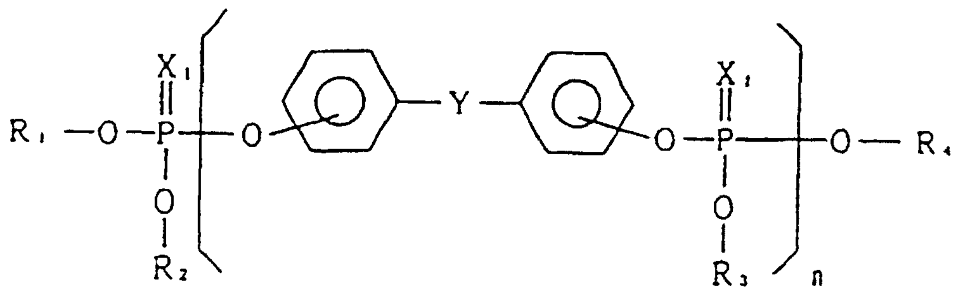

and
(C) a monophosphate ester flame retardant described by the general formula

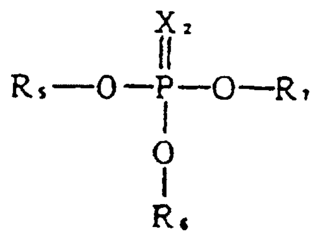

where $R_1$, $R_2$, $R_3$ and $R_4$ denote a phenyl group; $X_1$ and $X_2$ represent oxygen or sulphur atoms; Y denotes a phenyl group, lower alkyl group with 1 to 6 carbon atoms, or a sulfonyl group; $R_5$, $R_6$, and $R_7$ denote a phenyl group, cresyl group, xylenyl group, or trimethylphenyl group, lower alkyl group with 1 to 6 carbon atoms or a hydrogen atom with the proviso that $R_5$, $R_6$ and $R_7$ are not all hydrogen atoms and n is an integer greater than or equal to 1, the total of Components (B) and (C) being 3 to 30 parts by weight based on 100 parts by weight of Component (A) with Components (B) and (C) being used with the following range:

$$0.9 \geq \text{Component (B)}/(\text{Components (B)} + \text{(C)}) \geq 0.5$$

**2.** A resin composition according to claim 1, wherein Component (A) is a resin composition comprising polyphenylene ether resin and polystyrene resin.

**3.** A resin composition according to claim 1, wherein Component (A) is a resin composition comprising polycarbonate resin and polystyrene resin.

**Patentansprüche**

**1.** Entflammungshemmende Harzzusammensetzung, umfassend:

(A) 100 Gewichtsteile Polyphenylenetherharz oder Polycarbonatharz,
(B) ein oder mehrere Phosphatester-Entflammungshemmer der allgemeinen Formel

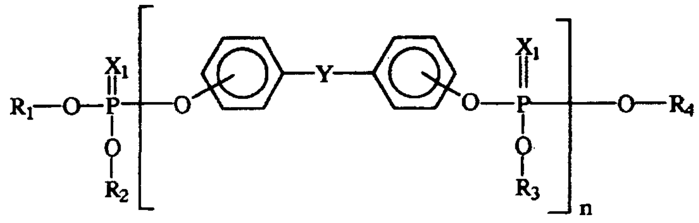

und
(C) einen Monophosphatester-Entflammungshemmer der allgemeinen Formel

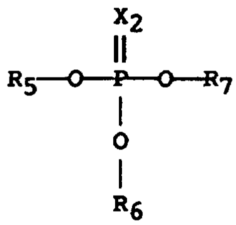

worin $R_1$, $R_2$, $R_3$ und $R_4$ eine Phenylgruppe bezeichnen, $X_1$ und $X_2$ Sauerstoff- oder SchwefelAtome repräsentieren, Y eine Phenylgruppe, niedere Alkylgruppe mit 1 bis 6 Kohlenstoffatomen oder eine Sulfonylgruppe bezeichnet, $R_5$, $R_6$ und $R_7$ eine Phenylgruppe, Cresylgruppe, Xylenylgruppe oder Trimethylphenylgruppe, niedere Alkylgruppe mit 1 bis 6 Kohlenstoffatomen oder ein Wasserstoffatom bezeichnen, unter der Bedingung, dass $R_5$, $R_6$ und $R_7$ nicht alle Wasserstoffatome sind und n eine ganze Zahl größer als oder gleich 1 ist,
wobei die Gesamtheit der Komponenten (B) und (C) 3 bis 30 Gewichtsteile, bezogen auf 100 Gewichtsteile der Komponente (A), beträgt, wobei Komponenten (B) und (C) mit dem folgenden Bereich eingesetzt werden:

$$0{,}9 \geqq \text{Komponente (B)/Komponenten (B) + (C)} \geqq 0{,}5$$

**2.** Harzzusammensetzung nach Anspruch 1, worin Komponente (A) eine Harzzusammensetzung ist, die Polyphenylenetherharz und Polystyrolharz umfasst.

**3.** Harzzusammensetzung nach Anspruch 1, worin Komponente (A) eine Harzzusammensetzung ist, die Polycarbonatharz und Polystyrolharz umfasst.

**Revendications**

**1.** Composition à base de résine à inflammation freinée, qui comprend :

(A) 100 parties en poids d'une résine de poly(oxyde de phénylène) ou d'une résine de polycarbonate,
(B) un ou plusieurs ignifugeants du type ester phosphate, de formule générale

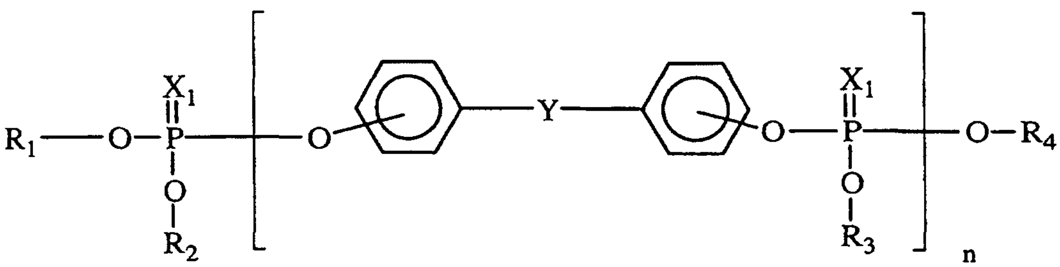

et
(C) un ignifugeant du,type ester monophosphate, de formule générale

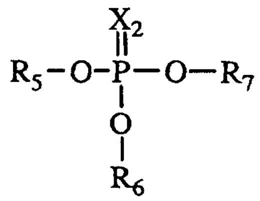

formules dans lesquelles $R_1$, $R_2$, $R_3$ et $R_4$ représentent des groupes phényle, $X_1$ et $X_2$ représentent un atome d'oxygène ou de soufre, Y représente un groupe phénylène, un groupe alkylène inférieur ayant 1 à 6 atomes de carbone, ou un groupe sulfonyle, $R_5$, $R_6$ et $R_7$ représentent chacun un groupe phényle, un groupe crésyle, un groupe xylényle, un groupe triméthylphényle, un groupe alkyle inférieur ayant 1 à 6 atomes de carbone ou un atome d'hydrogène, étant entendu que $R_5$, $R_6$ et $R_7$ ne sont pas tous des atomes d'hydrogène, et n désigne un nombre entier supérieur ou égal à 1,
le total des constituants (B) et (C) étant de 3 à 30 parties en poids pour 100 parties en poids de constituant (A) et les constituants (B) et (C) étant utilisés en des proportions telles que :

$$0,9 \geq \text{constituant (B)}/\text{constituant (B)} + \text{constituant (C)} \geq 0,5.$$

**2.** Composition à base de résine selon la revendication 1, dont le constituant (A) est une résine comprenant une résine de poly(oxyde de phénylène) et une résine de polystyrène.

**3.** Composition à base de résine selon la revendication 1, dont le constituant (A) est une résine comprenant une résine de polycarbonate et une résine de polystyrène.